**Europäisches Patentamt**

**European Patent Office**

**Office européen des brevets**

(19)

(11) Veröffentlichungsnummer: **0 208 310**
**B1**

# EUROPÄISCHE PATENTSCHRIFT

(12)

(45) Veröffentlichungstag der Patentschrift:
**03.01.90**

(21) Anmeldenummer: **86109396.1**

(22) Anmeldetag: **09.07.86**

(51) Int. Cl.⁴: **B23K 20/10**

(54) **Verfahren zum Regeln des Prozessverlaufes und zur Qualitätskontrolle beim Ultraschallschweissen von Werkstücken.**

(30) Priorität: **12.07.85 DE 3524999**

(43) Veröffentlichungstag der Anmeldung:
**14.01.87 Patentblatt 87/3**

(45) Bekanntmachung des Hinweises auf die Patenterteilung:
**03.01.90 Patentblatt 90/1**

(84) Benannte Vertragsstaaten:
**AT CH DE FR GB LI**

(56) Entgegenhaltungen:
**DE-A- 2 149 748**
**FR-A- 2 302 172**

(73) Patentinhaber: **Siemens Aktiengesellschaft,
Wittelsbacherplatz 2, D-8000 München 2(DE)**

(72) Erfinder: **Moll, Helmut, Dipl.-Ing. (FH),
Haselhofstrasse 32, D-8520 Erlangen-Tenneniohe(DE)**
Erfinder: **Krause, Ralf-Dieter, Dipl.-Ing.,
Reichenschwander Strasse 18, D-8500 Nürnberg(DE)**

## Beschreibung

Die Erfindung bezieht sich auf ein Verfahren zum Regeln des Prozeßverlaufes und zur Qualitätskontrolle beim Ultraschallschweißen von Werkstücken, bei dem die Werkstücke zwischen einem Ultraschallamboß und einer zugehörigen Ultraschallsonotrode liegen und durch Druck- sowie Ultraschalleinwirkung mit ihren Fügeflächen verschweißt werden, wobei die Verformung der zu verschweißenden Werkstücke als Parameter zur Steuerung bzw. Regelung der Prozeßvariablen herangezogen wird.

Beim Ultraschallschweißen besteht das Problem, geeignete Prozeßparameter zu finden, die eine Regelung des Schweißprozesses auf optimale Gütewerte zulassen. Vom Stand der Technik sind Verfahren bekannt, die zu diesem Zweck beispielsweise die Amplitude, die Generatorausgangsleistung oder die über die Schweißzeit integrierte Leistung erfassen. Darüber hinaus wurde speziell für das Ultraschall-Kunststoffschweißen bereits vorgeschlagen, die Ultrasschallenergie nach dem Erreichen einer fest vorgegebenen Endlage der zu verschweißenden Werkstücke abzuschalten.

Aus der SU-A 757 337 ist ein Verfahren zum Ultraschallschweißen von thermoplastischen Stoffen bekannt, bei dem über einen unmittelbar an der Sonotrode angebrachten Wegaufnehmer die Einsinktiefe der Sonotrode und damit die Verformung der Werkstücke beim Verschweißvorgang erfaßt wird. Bei Vorzeichenänderung der zweiten zeitlichen Ableitung des Wegsignals wird der Schweißvorgang beendet, da dann erfahrungsgemäß die Festigkeit der Schweißverbindung optimal sein soll.

Weiterhin ist aus der DE-A 2 149 748 ein Verfahren, eine Vorrichtung und ein System zur Herstellung von Verbindungen zu integrierten Schaltungen bekannt, bei dem im wesentlichen die Krafteinkopplung auf das Werkzeug, aber auch dessen Energiebeaufschlagung durch die über einen Wegaufnehmer ermittelbare Deformation der zu verbindenden Teile gesteuert ist.

Schließlich ist aus der FR-A 2 302 172 ein Ultraschallschweißverfahren bekannt, bei dem die Geschwindigkeit der Absinkbewegung der Sonotrode beim Verschweißvorgang erfaßt, mit vorgegebenen Grenzwerten verglichen und bei Überschreiten einstellbarer Schwellen die Energiezufuhr zur Sonotrode beendet wird.

Allerdings bestehen bei den vom Stand der Technik bekannten Vorgehensweisen Probleme darin, daß wegen der Werkstücktoleranzen unterschiedliche Ergebnisse bezüglich der Qualität der verschweißten Werkstücke, die sich insbesondere in der Festigkeit der Schweißverbindung zeigt, entstehen können. Dadurch ist die Verifizierbarkeit der vorbekannten Überwachungssysteme gering.

In der Praxis des Ultraschall-Metallschweißens wird daher üblicherweise der Schweißprozeß nach dem Ablauf einer fest vorgewählten Schweißzeit beendet. Dabei läuft der Schweißvorgang wie folgt ab:

a) Absenken der Sonotrode aus der Ausgangsstellung,

b) Ankoppeln der Sonotrode an das der Sonotrode zugeordnete Werkstück,

c) Aktivierung des Ultraschalls,

d) Beseitigung von evtl. Verschmutzungen und der Oxide in der Fügefläche der überlappt angeordneten Werkstücke unter gleichzeitiger Verformung beider Fügeflächen oder – bei stark unterschiedlichen Werkstoffen – des weicheren Materials,

e) Abschalten des Ultraschalls nach Ablauf der Schweißzeit.

Speziell durch den unterschiedlichen Zustand der Fügeflächen vor dem Schweißen, dem eventuell bei der Ankopplung der Sonotrode an das oben liegende Werkstück entstehenden Schlupf und das weiterhin mögliche Mitschwingen des dem Ultraschallamboß als Aufnahmewerkzeug zugeordneten Teils entstehen bei fest vorgegebenen Parametern Verbindungen unterschiedlicher Festigkeit. Es wird daher auch versucht, mit spezifischen Steuereinrichtungen den Schweißvorgang speziell nach einer vorwählbaren, vom Ultraschall-Generator abgegebenen Energiemenge zu beenden. Es hat sich jedoch gezeigt, daß auch mit einer derartigen Steuerung keine reproduzierbare Schweißqualität erreichbar ist, da insbesondere die Reibungsverluste nicht nur in der Fügefläche, sondern auch an den Koppelstellen der Sonotrode und/oder des Ambosses mit den Werkstücken auftreten können. Derartige Nebeneffekte konnten bisher überhaupt nicht berücksichtigt werden.

Der Erfindung liegt daher die Aufgabe zugrunde, ein Verfahren anzugeben, mit dem die Qualität von Ultraschall-Schweißungen unabhängig von Teiletoleranzen durch Erhöhung der Festigkeiten und Einengung der Festigkeitstoleranzen verbessert und überwacht werden kann.

Erfindungsgemäß ist die Aufgabe durch die Abfolge folgender Verfahrensschritte gelöst:

– Vor Aktivierung der Ultraschall-Energie wird die Sonotrode auf die auf dem Amboß aufliegenden Werkstücke abgesenkt,

– beim Aufsetzen der Sonotrode auf die Werkstücke wird die Wegposition auf Null abgeglichen, so daß ein Istzustand der Werkstücke unter Berücksichtigung der Teiletoleranzen erfaßt wird,

– nach dem Nullabgleich wird die Ultraschall-Energie aktiviert und von der Sonotrode ein vorgegebener Verformungsweg durchfahren und danach die Ultraschall-Energie abgeschaltet.

Vorzugsweise wird dabei der Verformungsweg unabhängig von Teiletoleranzen konstant gehalten.

Der Erfindung lag eine Analyse der beim Ultraschallschweißen auftretenden Elementarvorgänge zugrunde, die insbesondere für die Verformung der Fügeteile verantwortlich sind. Letztere wird bei konstanter Schweißzeit von einer Reihe von Faktoren beeinflußt, zu denen im einzelnen zählen:

– Größe der Schwingungsamplitude beim Schweißvorgang, d.h. die sogenannte Lastamplitude.

– Resonanzverhalten des Ultraschallsystems.

– Größe der Schweißkraft.

— Ankopplung der Sonotrode.
— Mitschwingen der Fügeteile.
—Oberflächenbeschaffenheit und Verschmutzung der Fügeteile.
— Art und Eigenschaften der Werkstoffe.
— Geometrie der Fügeteile.

Alle Einzelfaktoren können ursächlich eine Verformung bewirken, die aber durch die oben genannten verschiedenen Ursachen im praktischen Fall durchaus unterschiedlich groß sein kann. Die unterschiedliche Verformung beeinträchtigt die Qualität besonders bei Verbindungen mit dünnen, blanken oder lackisolierten Drähten, Litzen, Folien und Kontakten. Beispielsweise kann sich bei zu geringer Verformung die Verbindung lösen, dagegen bei zu starker Verformung bricht der Übergang zum unverformten Querschnitt. Es wurde nun erkannt, daß durch das definierte Erfassen der Verformung der Fügeteile in der oben genannten Art während des Schweißprozesses in Kombination mit einem geeigneten Nullabgleich vor Aktivierung der Ultraschall-Energie und durch das Abschalten des Ultraschalls nach dem Erreichen vorgewählten Einsinktiefe der Sonotrode eine konstante Verformung erzielt wird. Damit kann der Einfluß der Teiletoleranzen vollständig eliminiert werden.

Das erfindungsgemäße Verfahren läßt sich für alle Bereiche des Ultraschallschweißens anwenden. Im praktischen Einsatz hat sich die Erfindung beim Kunststoffschweißen von Präzisionskunststoffteilen und vor allem beim Metallschweißen, wie beispielsweise beim Verschweißen von Aluminiumdeckeln mit Gehäusen für Entstörfilter, bewährt.

Eine spezielle Anwendung des Ultraschallmetallschweißens wird mit der Erfindung für das Anschweißen von Lackdrähten und/oder Litzen auf metallischen Unterlagen angegeben. Eine weitere Anwendung dieser Art ist das Anschweißen von elektrischen Kontaktstücken auf Kontaktstückunterlagen bei elektrischen Schaltgeräten.

Weitere Einzelheiten und Vorteile der Erfindung ergeben sich aus der nachfolgenden Figurenbeschreibung von Ausführungsbeispielen. Es zeigen jeweils in schematischer Darstellung

Fig. 1 bis 3 Vorrichtungen zur Durchführung des neuen Verfahrens, bei denen ein Wegmeßsystem der Sonotrode in unterschiedlicher Weise zugeordnet ist.

Fig. 4 eine vorteilhafte Anwendung dieses Verfahrens zum Anschweißen von Lackdrähten auf metallische Unterlagen.

Fig. 5 eine Anwendung des erfindungsgemäßen Verfahrens bei Werkstücken, die in ihrer Lage toleranzbehaftet sind und

Fig. 6 eine weitere Anwendung zum Aufschweißen von Sinterkontaktformteilen auf einem metallischen Kontaktträger.

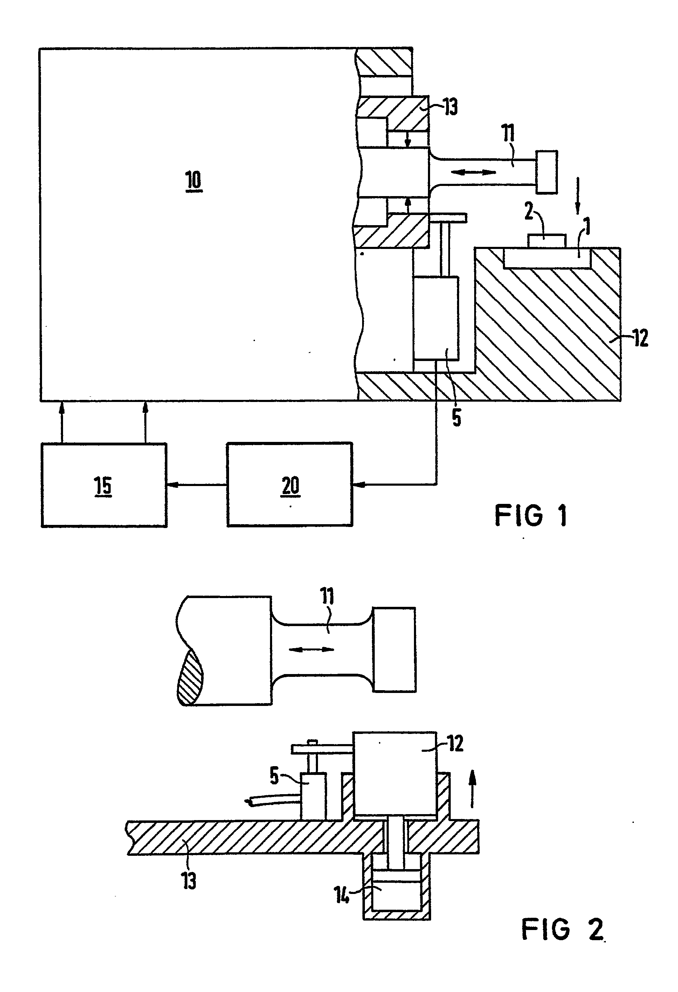

In den Figuren sind identische Teile bzw. gleichwirkende Elemente der Schweißanlage mit den gleichen Bezugszeichen versehen. Insbesondere die Fig. 1 bis 3 werden teilweise zusammen beschrieben.

In Fig. 1 bedeuten 10 ein Ultraschallschweißgerät, das im wesentlichen aus einer Ultraschallsonotrode 11 als aktives Schweißwerkzeug und einem Amboß 12 als Aufnahmewerkzeug für zwei zu verschweißende Fügeteile 1, 2 sowie einer zugehörigen Presse 13 zur Schweißdruckerzeugung besteht. Die Sonotrode 11 und der Amboß 12 sind in bekannter Weise aufgebaut; insbesondere ist die Sonotrode 11 in der Presse 13 entkoppelt gelagert, so daß die Ultraschallschwingungen auf das obere Werkstück 2 übertragbar sind. Das untere Werkstück 1 ist dagegen im Amboß 12 fixiert. Das Schweißgerät 10 weist einen Ultraschallgenerator 15 auf, der Frequenzen, beispielsweise im Bereich zwischen 20 und 40 kHz, erzeugt.

Dem eigentlichen Schweißgerät 10 sind eine Meß- und Überwachungseinrichtung 20 zugeordnet, mit denen Sonotrodenstrom I und Sonotrodenspannung U erfaßbar sind, so daß fortlaufend die Meßwerte als Analogsignale in Abhängigkeit von der Schweißzeit zur Verfügung stehen. Es werden zusätzlich Verformungssignale aufgenommen und in der Meß- und Überwachungseinrichtung ausgewertet. Dafür ist in Fig. 1 beispielsweise der Ultraschallsonotrode 11 bzw. dem Ultraschallamboß 12 ein Wegaufnehmer 5 indirekt zugeordnet, mit dem die Lage der Ultraschallsonotrode 11 berührungslos erfaßt werden kann. Es kann also das Absenken der Ultraschallsonotrode 11 verfolgt und damit deren Aufsetzen auf dem Werkstück 2 festgestellt werden. Das Signal des Wegaufnehmers 5 wird in die Steuereinrichtung 20 geleitet.

Die modifizierte Schweißvorrichtung nach Fig. 1 wird nun derart gesteuert, daß ein Schweißvorgang folgendermaßen abläuft: Zunächst wird die Position der Sonotrode 11 in der Ausgangslage festgelegt und das Meßsystem mit Wegaufnehmer 5 und Auswerteeinheit 20 aktiviert. Dann wird die Sonotrode 11 auf die Fügeteile abgesenkt und deren Position bei Berühren mit dem Werkstück 2 überprüft. Wenn beispielsweise eines der Fügeteile fehlen würde, wäre die Berührposition tiefer, so daß allein dadurch unmittelbar eine Fehlermeldung ermöglicht wird.

Nunmehr beginnt die eigentliche Ultraschallverschweißung: Die Berührposition der Sonotrode 11 wird als Nullposition erfaßt und anschließend der Ultraschall unter Beibehaltung der Berühr- bzw. Schweißkraft eingeschaltet. Die Sonotrode 11 verformt während des Schweißvorganges die Fügeteile 1 und 2.

Nach Erreichen eines vorgewählten Verformungsweges wird der Generator abgeschaltet und damit die Ultraschalleinwirkung beendet. Die Schweißzeit für den vorgewählten Verformungsweg kann dabei variieren. Als unabhängige Variable wird also der Weg vorgegeben und dafür das Signal des Wegaufnehmers erfaßt und ausgewertet.

Zusätzlich ist ein Überwachen der Verformungszeit möglich. Zu lange Schweißzeiten deuten nämlich auf Fehlermöglichkeiten hin, die im wesentlichen folgende Ursachen haben können:

A. Zu geringe Amplitude,
B. Zu geringe Schweißkraft, C. Verschmutzte Fügefläche,
D. Ungünstige Ankoppelbedingungen, die z.B. durch Sonotrodenverschleiß hervorgerufen werden können,
E. Mitschwingen der Fügeteile.

Die Fehlermöglichkeiten gemäß den Punkten A und B werden ursächlich von der Schweißanlage bewirkt. Für den Punkt C ist im wesentlichen die Vorbehandlung der Werkstücke bzw. deren Fügeflächen von Bedeutung. Punkt D kann ursächlich durch die Ultraschallschweißvorrichtung mit der Sonotrode, aber auch durch die Werkstücke bewirkt werden, während E durch ungenügende Fixierung des Werkstückes 1 im Amboß verursacht wird.

Bei der Anordnung nach Fig. 1 wird durch die unmittelbare Messung der Einsinkbewegung der Sonotrode die Verformung der Werkstücke erfaßt, wodurch der Prozeßverlauf der Schweißung kontrolliert werden kann. Die Geometrie und die Toleranzen der Fügeteile, die insbesondere bei der Großserienfertigung bisher eine ganz erhebliche Rolle spielen, können nunmehr ausgeschaltet werden. Insbesondere kann dabei vor der Aktivierung der Ultraschallenergie jeweils ein automatischer Nullabgleich (sogenanntes "Nullen") durchgeführt werden. Anschließend wird von der Sonotrode jeweils ein vorgegebener Verformungsweg durchfahren und danach die Ultraschallenergie abgeschaltet. Im einzelnen wird dieses weiter unten an spezifischen Beispielen verdeutlicht.

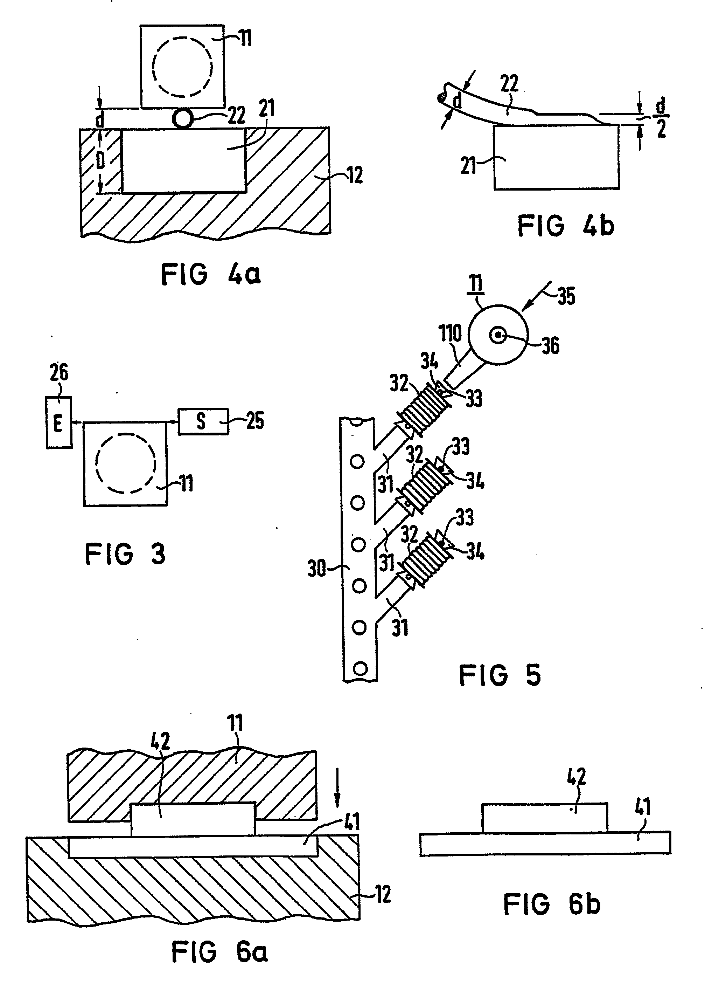

Während in Fig. 1 als Wegaufnehmer 5 beispielsweise ein Glasmaßstab an der Schweißpresse 13 angebracht ist und damit eine indirekte Erfassung der Absinkbewegung von der Sonotrode 11 ermöglicht wird, ist in Fig. 2 der Ultraschallamboß 12 selbst höhenbeweglich ausgebildet, wofür Hubelemente 14 vorhanden sind. Der Wegaufnehmer 5 läßt sich dann zur Erfassung der Sonotrodenlage relativ zur Werkstückposition unmittelbar am Amboß 12 anbringen. Zur Realisierung des Wegmeßsystems lassen sich auch kapazitive oder induktive Wegaufnehmer verwenden. Es ist auch möglich, die Höhenlage der Sonotrode 11 optisch mittels eines Laserstrahls abzutasten, was anhand Fig. 3 verdeutlicht wird.

In Fig. 3 wird die relative Verschiebung einer Kante der Sonotrode 11 berührungslos durch den Lichtstrahl eines Laserstrahlsystems mit Strahlungsquelle 25 und zugehörigem Empfänger bzw. Reflektor 26 erfaßt. Eine derartige Anordnung hat den Vorteil einer hohen Genauigkeit, da der Meßwert unmittelbar im Arbeitsbereich der Sonotrode 11 erfaßt wird.

In Fig. 4 ist zwischen Ultraschallsonotrode 11 und Ultraschallamboß eine Werkstückanordnung aus einem metallischen Teil 21 und einem lackbeschichteten Draht 22 dargestellt. In der Praxis kann das Trägerteil 21 in seiner Dicke D von 1 bis 2 mm nach einer Vorbearbeitung mit Toleranzen von 0,1 mm behaftet sein, während der Draht 22 einen Durchmesser d von beispielsweise 100 µm haben kann, wobei der beim Ultraschallschweißen erzeugte Abrieb der Lackschicht wenige µm, die sich anschließende Verformung des Drahtdurchmessers einige zehn µm ausmacht. Sie kann bis zu 90% des Drahtdurchmessers betragen. Diese Größenverhältnisse zeigen deutlich, daß die eigentliche Verformung geringer ist als die möglichen Werkstücktoleranzen. Aus diesem Grunde ist das Verschweißen von beschichteten Drähten und/oder Litzen mit Oberflächenabrieb beim Stand der Technik mit konstant vorgegebenen Schweißparametern, wie z.B. Schweißzeit, -amplitude, -kraft oder -energie bzw. fest vorgegebener Endlage, problematisch.

Mit der Erfindung wird nunmehr gewährleistet, daß die Toleranz des Trägerteiles 21 weitgehend ausgeschaltet ist und die Verformung des dünnen Lackdrahtes exakt vorgegeben werden kann. Dies ist in diesem Fall deshalb von Wichtigkeit, da sich bei zu geringer Verformung die Verbindung leicht wieder lösen, dagegen bei zu starker Verformung der Übergang des verformten Drahtes zum unverformten Querschnitt leicht brechen könnte. Das nun angewandte Verfahren ermöglicht es, die Dicke des Restquerschnittes vorzugeben und exakt einzuhalten.

In Fig. 5 ist eine Werkstückanordnung dargestellt, bei der auf einem ebenen metallischen Trägerband 30 im Abstand an schrägen Laschen 31 elektrische Bauelemente, wie z.B. Miniatur-Drosselspulen, angeordnet sind. Solche Spulen bestehen jeweils aus einem Ferritkörper 32, der mit Draht 33 umwickelt ist, welcher an endseitigen, gewinkelten Kontaktfahnen 34 befestigt werden muß. Dafür wird der Draht 33 schräg über die Kontaktfahne 34 gelegt und angeschweißt.

Um einen derartigen Fertigungsvorgang durchführen zu können, ist es erforderlich, die Sonotrode 11 mit einem Querhorn 110 von der Seite her an den Kontaktbereich heranzufahren und die Verschweißung einzuleiten. Die Sonotrode 11 ist daher in Richtung des Pfeiles 35 verschiebbar, wobei die Schwingungsrichtung 36 der Sonotrode 11 senkrecht zur Papierebene steht.

Durch Verwendung des oben beschriebenen Wegmeßsystems läßt sich erreichen, daß neben Teiletoleranzen auch Lagetoleranzen, die durch die Abmessungen des Trägerbandes 30 mit den schrägen Laschen 31 entstehen können, ausgeglichen werden und damit die dünne, schwierig handhabbaren Drähte sicher kontaktierbar sind.

In Fig. 6 ist zwischen Ultraschallsonotrode 11 und Ultraschallamboß 12 eine Kontaktstückunterlage 41 dargestellt, auf die ein Formteil 42 aus einem Sinterverbundwerkstoff mittels Ultraschall aufgeschweißt werden soll. Die Kontaktstückunterlage 41 kann ein Band sein, auf das beispielsweise kreisförmige Kontaktteile aufgeschweißt werden.

Mit der Erfindung bietet sich nunmehr die Möglichkeit, durch die genaue Erfassung des Verformungsweges ein exaktes Aufschweißen der Unterseite des Formteiles 42 auf die Kontaktstückunterlage 41 durchzuführen.

Entscheidend ist bei allen Ausführungsbeispielen, daß der Verformungsweg nicht nur anwendungsspezifisch vorgegeben wird, sondern bei der Fertigung unabhängig von Teiletoleranzen der Werkstücke konstant gehalten wird. Die Teiletoleranzen selbst werden durch den Nullabgleich vor der Ultraschalleinwirkung ausgeschaltet.

## Patentansprüche

1. Verfahren zum Regeln des Prozeßverlaufes und zur Qualitätskontrolle beim Ultraschallschweißen von Werkstücken, bei dem die Werkstücke zwischen einem Ultraschallamboß und einer zugehörigen Ultraschallsonotrode liegen und durch Druck- und Ultraschalleinwirkung mit ihren Fügeflächen verschweißt werden, wobei die Verformung der zu verschweißenden Werkstücke als Parameter zur Steuerung bzw. Regelung der Prozeßvariablen herangezogen wird, mit folgenden Verfahrensschritten:
    – Vor Aktivierung der Ultraschall-Energie wird die Sonotrode auf die auf dem Amboß aufliegenden Werkstücke abgesenkt,
    – beim Aufsetzen der Sonotrode auf die Werkstücke wird die Wegposition auf Null abgeglichen, so daß ein Istzustand der Werkstücke unter Berücksichtigung der Teiletoleranzen erfaßt wird,
    – nach dem Nullabgleich wird die Ultraschall-Energie aktiviert und von der Sonotrode ein vorgegebener Verformungsweg durchfahren und danach die Ultraschall-Energie abgeschaltet.

2. Verfahren nach Anspruch 1, dadurch gekennzeichnet, daß der Verformungsweg unabhängig von Teiletoleranzen der Werkstücke konstant gehalten wird

## Claims

1. A method for controlling the course of a process and for quality control with ultrasonic welding of workpieces, in which the workpieces lie between an ultrasonic anvil and an ultrasonic sonotrode belonging thereto, and are welded with their joint surfaces by pressure and ultrasonic action, whereby the shaping of the workpieces to be welded is drawn on as a parameter for controlling or checking the process variables, with the following method steps:
    before activation of the ultrasonic energy the sonotrode is lowered onto the workpieces lying on the anvil,
    when placing the sonotrode on the workpieces the path position is adjusted to nil so that an actual state of the workpieces is acquired under consideration of the part tolerance,
    after the nil adjustment the ultrasonic energy is activated and passes from the sonotrode through a specified shaping path and then the ultrasonic energy is switched off.

2. Method according to claim 1, characterised in that the shaping path is kept constant irrespective of the part tolerance of the workpieces.

## Revendications

1. Procédé pour régler le déroulement du processus et contrôler la qualité dans le soudage de pièces par ultrasons, selon lequel les pièces sont disposées entre une enclume à ultrasons et une sonotrode à ultrasons correspondante et sont soudées sous l'action d'une pression et des ultrasons par leurs surfaces à joindre, avec utilisation de la déformation des pièces à souder en tant que paramètre pour commander ou régler les variables du processus, comprenant les opérations suivantes:
    – avant la mise en action de l'énergie ultrasonore, on fait descendre la sonotrode sur les pièces disposées sur l'enclume,
    – à l'application de la sonotrode contre les pièces, on ajuste la position pour le trajet de déplacement à zéro, ce qui détermine un état réel des pièces en tenant compte des tolérances des pièces et
    – après la compensation à zéro, on met l'énergie ultrasonore en action, on produit le déplacement de la sonotrode sur un trajet de déplacement préfixé puis on coupe l'énergie ultrasonore.

2. Procédé selon la revendication 1, caractérisé en ce que le trajet de déformation est maintenu constant, indépendamment de tolérances des pièces.

FIG 1

FIG 2

FIG 4a

FIG 4b

FIG 3

FIG 5

FIG 6a

FIG 6b